# EUROPEAN PATENT SPECIFICATION

(11) **EP 2 709 114 B1**
(45) Date of publication and mention of the grant of the patent: **22.11.2017**
(21) Application number: 13184918.4
(22) Date of filing: 18.09.2013
(51) Int. Cl.: H01B 3/44, H01B 7/18, H01B 7/28, H01B 5/10, H01B 7/22, H01B 9/02

(54) **Subterranean cable**
Unterirdisches Kabel
Câble sous-terrain

(30) Priority: 18.09.2012 GB 201216685; 20.12.2012 GB 201223227
(43) Date of publication of application: 19.03.2014
(73) Proprietor: BPP Cables Ltd, London EC2V 5DE (GB)
(72) Inventor: Patel, Darren Lindsay, Essex, Essex CM120EH (GB)
(74) Representative: Turner, Craig Robert

(56) References cited:
- EP-A1- 0 670 577
- US-A1- 2007 158 095
- US-A1- 2010 147 505

## Description

The present invention relates to a cable for conducting electricity and carrying tension, and is particularly useful for subterranean applications. The invention also relates to an insulation layer to electrically insulate the conductor component of such cables.

### Background

Devices are routinely placed in wellbores during the course of oil exploration or production. Such devices are often powered by electricity, which is transmitted by power cables from the surface. Devices include monitoring devices (to provide information regarding the subterranean formations surrounding the wellbore) and pumps (to aid in pumping oil to the surface).

The downhole environment and the power requirements of the devices present a number of challenges when providing such cables. For instance, the downhole environment may be corrosive (for instance, the environment may exhibit extremes of pH's, or may be oxidative or reductive, for instance, if hydrogen sulphide is present), and thus cables need to be resistant to such challenges. Downhole temperatures can vary with depth; typically temperatures increase with increasing depth, meaning the components of the cable must function properly in a wide range of temperatures. If the power cable is also used to suspend, or lower and lift devices into and out of the wellbore, the power cable must be strong enough to support the devices. Not only must such cables be strong enough to support the devices, an important consideration is that they must be strong enough to support their own weight: where the depth of wellbore is several hundreds, if not thousands of meters long, the self-weight of the cable itself may be substantial. The cable must also be mechanically robust and resilient so that an operator can use it in the field repeatedly without concern that it will fail. Most importantly, the cable must be capable of providing sufficient electrical power to any device downhole. Finally, wellbore environments are typically restricted in terms of space, which in turn places restrictions on the maximum allowable cable diameter. A typical wellbore may have an inner diameter as small as around 5 inches, and the maximum diameters of cables are

typically restricted to a fraction of the wellbore diameter. These requirements, taken together, present challenges when providing cables suitable for use downhole.

### Summary of the Invention

The present invention provides a cable comprising three or more cores, each core comprising a conductor and an insulator layer disposed axially external to the conductor, wherein each core extends along a longitudinal axis of the cable, wherein the insulator layer comprises a first fluoropolymer, and a first plurality of wires disposed axially external to the three or more cores and extending along a longitudinal axis of the cable, wherein the first plurality of wires consists of an alloy comprising nickel, chromium and optionally up to 20 % (w/w) additives or impurities. Further, the present invention provides a method of manufacturing a cable according to claim 1. In addition present invention provides a method of transmitting electricity, comprising connecting a first installation or device with a second installation or device with a cable according to the present invention, and transmitting electricity from the first installation or device to the second installation or device through the cable, wherein the first installation or device is in a wellbore. Further the present invention provides a method of suspending a first device or installation in a wellbore, comprising providing the cable of the invention, securing a first end of the cable to the first device or installation, securing a second end of the cable to a second device or installation, and suspending the first device or installation in the wellbore.

Further features are defined in the dependent claims.

### Description

The present invention relates to a cable for conducting electricity, in particular, for cables used in subterranean applications. The invention also relates to insulation layers to insulate the conductor components of such cables. The cables of the present invention are useful for providing AC (alternative current) electricity to downhole devices, as well as DC (direct current) electricity.

The cable may be used to power any downhole device that uses electricity, and is particularly useful for powering ESPs (electrical submersible pumps). The present invention is particularly useful when configured as a high strength tensile cable for supporting and powering ESPs. The cable of the present invention is capable of operating at around 5kV to 6kV, with a current carrying capacity of 65A to 150A. The cable can also be subjected to relatively high temperatures. For instance, the cable may be used in downhole temperatures of up to 80°C, up to 90°C, up to 100°C, up to 120°C, up to 130°C, up to 140°C, or up to 150°C. Further, the cable may be used in corrosive environments, for instance, in low or high pH's, or in oxidative or reductive environments. For instance, the cable is able to tolerate exposure to hydrogen sulphide of around 4%-6% (mol). The cable may also be subjected to working loads of at least 8,000lbs (35.6kN). In a particularly preferred embodiment, present invention provides an AC cable for powering an ESP.

The cable of the present invention comprises three conductors and three insulator layers, wherein the conductors and the insulators extend along a longitudinal axis of the cable, preferably in a helical configuration, wherein each insulator layer is axially external to each conductor to thereby form each, and wherein the insulator layers each comprise of fluoropolymer. The helices of the cores preferably intertwine around each other. This configuration is particularly advantageous in that the cable is provided with flexibility and resistance against fatigue induced from bending forces applied to the cable. The cable further comprises a first plurality of wires disposed axially external to the three cores and extending along a longitudinal axis of the cable.

International standard IEC 60287 (set out by the International Electrotechnical Commission) provides ampacity calculations for the sizes of the central and return conductors for medium-voltage and high voltage power cables of various construction types. The conductors of the present invention are sized to allow for sustained and safe level of current which does not lead to overheating of the cable, such that the maximum allowable operating temperature is not exceeded. Overheating can lead to a number of problems, such as premature degradation and break down of the insulation layers. Other factors which determine conductor sizing include the operating environment, expected number of flex cycles during operation, mechanical capacity, the cable type and its service conditions.

When the conductors are energized, heat is generated within the cable due to the electrical losses, the dielectric losses in the insulation and the losses in the metallic elements of the cable. The size and ampacity of the cable is dependent on the way the heat is transmitted to the cable surface and ultimately dissipated to the surrounding environment. The rate of heat dissipation is dependent on the various thermal resistances of the cable materials and on the external medium and ambient temperature. If the cable is able to dissipate more heat, the conductors can be smaller for a given current carrying capacity.

The normal maximum continuous rating of the cable is dependent on a number of factors. The most important of these is the maximum permissible conductor temperature rise (above ambient temperature). The maximum current rating is the loading (in amperes) which, when applied continuously until steady state conditions are reached, will produce the maximum allowable conductor temperature. Steady state is reached when the rate of heat generation in the cable is equal to the rate of heat dissipation from the cable's surface. This state is the primary condition considered when calculating current rating. The resistance of the conductors should be as low as possible to minimize power losses from the conductors.

In an embodiment, the conductors comprise tinned copper or copper alloy. Copper has a number of properties that make it a suitable material for a conductor, such as excellent conductivity and mechanical strength, and thus is the most preferred conductor material. Different grades of copper may be used if desired (e.g. UNS C11000 or C10300 - note "UNS" stand for "unified numbering system"). Copper alloys such as copper beryllium alloys (e.g. UNS C17000), copper brass alloys (e.g. UNS C26000), copper nickel alloys (e.g. UNS C71500 or C71640), copper aluminium brasses (e.g. UNS C68800) may also be used for the conductors. Such alloys may provide slightly improved mechanical characteristics (such as higher tensile and fatigue strengths), but may do so at the expense of slightly lower thermal and electrical conductivities, or increased cost. The skilled person will appreciate whether copper or a copper alloy should be used in the cable of the present invention.

The conductor may be formed of a single strand (also known as a solid core), or a plurality of stranded wires. The plurality of stranded wires is preferred, due to its improved flexibility and improved resistance to fatigue compared to solid core configurations. The plurality of wires in DC cable may also be braided, since braids further improve the resistance of the conductor to fatigue. In particular, the braid configuration provides good electrical and mechanical performance, at the same time exhibiting good resistance forces to generated from repeated pulling and relaxing of the cable that can occur during operation.

The insulation layers of the present invention comprise a fluoropolymer. The insulation layer serves to insulate and electrically isolate the conductor from other components of the cable. The insulation thickness should be sufficient to sustain the electrical stresses developed during cable operation.

Electrical field distribution depends on the specific conductivity of the insulation, which itself is highly dependent on the temperature and electric field. The highest electrical stress develops in the insulation region closest to the conductor, as the electric field drives the stress distribution while the cable carries no load. As the cable is subjected to full load, a temperature gradient develops, and this affects the electrical stress much more than the electrical field previously did. As a result of a temperature rise near the conductor, the electrical stress exhibits a tendency for an increase at the outer radius of the insulation and a decrease in the insulation region closer to the conductor.

The fluoropolymers of the present invention will now be described. Fluoropolymers are polymers based on fluorocarbons, which comprise strong carbon-fluorine bonds. Such polymers exhibit high resistance to solvents, acids and bases, as well as a good resistance to high temperatures. Some fluoropolymers are known for their non-stick and friction-reducing properties. The best known example of a fluoropolymer is polytetrafluoroethylene, commercially available as Teflon^{tm}, which is commonly used as a non-stick coating for cookware. As used herein, the term "fluoropolymer" means any molecule comprising at least one repeating structural unit, where the at least one structural unit comprises at least one carbon-fluorine bond. Each structural unit is preferably covalently bonded to another structural unit. A typical fluoropolymer comprises a backbone of repeating -(CR₁R₂-CR₃CR₄)- structural units, where at least one of R₁ to R₄ is a fluorine atom. Provided at least one of R₁ to R₄ is a fluorine atom, possible moieties for the other R₁ to R₄ (i.e. the ones that are not fluorine) may be individually selected from -H, -CH₃, -CF₃, -Cl, -CCl₃, -OCH₃, -OCF₃, -OCF₂CF₃,-OCF₂CF₂CF₃, and -OCF₂CF₂ CF₂CF₃. Each of the repeating structural units can be identical, Alternatively, there can be two, three or more distinct structural units; where there are two or more structural units, the resulting polymer is typically called a copolymer.

The molecular sizes of the fluoropolymers of the present invention may vary, but are sufficiently large such that they are solid at the temperatures at which the cables of the present invention operate. The minimum melting temperatures of any fluoropolymer for use with the invention may be 225 °C, 230 °C, 235 °C, 240 °C, 245 °C, 250 °C, 255 °C, or higher.

In an embodiment, the fluoropolymer is a polymer consisting of one monomer. In another embodiment the fluoropolymer is a copolymer comprising two different monomers. In another embodiment, the fluoropolymers may comprise three, four or more different monomers.

The insulator layer of the cable comprises a first fluoropolymer. The first fluoropolymer may comprise, or consist of, a first monomer. The first monomer may be selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene, and hexafluoropropylene.

The first fluoropolymer may further comprise a second monomer. In another embodiment, the first fluoropolymer may consist of a first and a second fluoropolymer. The second monomer may be selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene and hexafluoropropylene.

In a preferred embodiment, the first fluoropolymer consists of two alternating monomers of ethylene and 1,1,2,2-tetrafluoroethylene, given by the structure (-CH₂-CH₂-CF₂-CF₂-)ₙ. The fluoropolymer is also known as ETFE, or poly(ethylene-co-tetrafluoroethylene). This fluoropolymer is commercially available under the brand names Tefzel^{tm}, Fluon^{tm}, Neoflon^{tm} and Texlon^{tm}. ETFE exhibits a number of desirable properties, including a high melting temperature and high chemical resistance. In another preferred embodiment, the first fluoropolymer consists of one monomer of 1,1,2,2-tetrafluoroethylene. The structure of this polymer is (-CF₂-CF₂-)ₙ, and is known as poly(1,1,2,2-tetrafluoroethylene), or PTFE.

The use of fluoropolymers in the insulation layers is unusual. This is because such materials are not typically used as insulators, since there are other insulator materials which are normally used. Usually synthetic rubber based materials such as EPDM (ethylene propylene diene monomer) are used, since they provide acceptable insulation capabilities in most circumstances, but at a reduced cost compared to fluoropolymers. However the surprising discovery has been made that fluoropolymers (in particular, PTFE and ETFE) provide better electrical insulation at a broader temperature range (in particular, at elevated temperatures). Further, fluoropolymers (especially ETFE and PTFE) exhibit an improved decomposition temperature, durability and chemical resistance compared to known insulators, which in turn allows for a higher conductor temperature, which in turn allows for a greater steady state current. The higher resistance to thermal and chemical degradation also contributes to a reduced degradation of the insulating layer, thereby leading to an improved longevity of the cable itself. This higher resistance is also thought to allow the cable of the present invention, when used as an ESP cable, to be deployed downhole for relatively long periods compared to existing ESP cables.

Since the electrical insulating capabilities of the insulating layers are improved at higher temperatures, the present invention in turn allows for a thinner insulation layer than previously possible. Further, fluoropolymer insulation provides higher hoop (circumferential) strength to the cable core than rubber insulation. This allows for thinner insulation layers and in some cases removal of braided reinforcement which in turn allows for an improved capability of the cable to dissipate heat from the conductors, as well as allowing for thicker conductors for a given diameter of cable (i.e. since the maximum diameter of the cable is limited due to the constraints imposed by the limited space of the wellbore, if a lower proportion of the diameter is taken up by the insulators, then other components such as the conductors can occupy a greater proportion of the diameter). The combination of thinner insulation layers and thicker conductors together provides an improvement in the ampacity of the cable.

In addition, fluoropolymers exhibit other desirable characteristics making them suited for use as insulation for downhole cables. This includes low dielectric loss; good resistance to stress cracking; good resistance to chemicals; excellent mechanical properties, such as high tensile strength, 'cut-through' resistance, and low creep. Fluoropolymers exhibit an ideal level of stiffness that means it is not too stiff, such that the cable has enough flexibility for use, but not too flexible and soft, such that the insulation material does not extrude through the armour wires when the cable is under tension. Furthermore, fluoropolymers retain these properties at the higher temperatures, which means these advantages are seen across the range of temperatures seen downhole. ETFE is the a particularly advantageous fluoropolymer for use with the invention in this regard.

The fluoropolymers used in any layer of any embodiment of the invention may be foamed or non-foamed. Foaming the fluoropolymers may reduce costs by reducing the amount of material used. However, the fluoropolymers used with the invention are preferably non-foamed, since the advantages listed above may be reduced to some extent when the fluoropolymer is foamed.

Note the cables of the present invention may need to be deployed in wellbores with diameter as low as 4.9 inches (12.5 cm), or even smaller, meaning the cables need to be as small as possible.

The cable may further comprise braiding layers, which are external to the insulator layers. The braiding layers increase the hoop strength of the insulation. They are particularly beneficial during rapid gas decompression of entrapped gases. The typical material used in the braiding layers is aramid fibre.

The cable may further comprise filler material, which may be used to fill the interstices between the at least three cores of the cable. The filler material may aid is supporting the structure of the cable, and to maintain its circularity. The filler material may comprise a second fluoropolymer, which advantageously shows small expansion from the ingress of oil and the thermal response.

The second fluoropolymer may comprise, or consist of, a third monomer. The third monomer may be selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene, and hexafluoropropylene.

The second fluoropolymer may further comprise a fourth monomer. In another embodiment, the second fluoropolymer may consist of a third and a fourth fluoropolymer. The fourth monomer may be selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene and hexafluoropropylene. In a preferred embodiment, the second fluoropolymer consists of two alternating monomers of ethylene and 1,1,2,2-tetrafluoroethylene or most preferably, the second fluoropolymer consists of one monomer of 1,1,2,2-tetrafluoroethylene, i.e. PTFE.

The cable may further comprise a copper tape, which may be disposed external to the core bundle, including the conductors, the insulator layers, the braiding layers and the filler. The copper tape is used to hold the components of the cable in place. The copper tape may also advantageously serve as a further barrier to fluids encountered during use, such as water, oil, and any gases found in the environment, thereby protecting the cores disposed internally to the copper tape.

The cable may further comprise a bedding/barrier layer, which layer may comprise a third fluoropolymer, wherein the bedding/barrier layer extends along the longitudinal axis of the cable and is external to the copper layer. The bedding/barrier layer provides a number of roles, including providing further insulation of the internal components of the cable from the external environment or any current in the armour, but also provides an impermeable layer to prevent ingress of any gas and liquid into the interior of the cable, and to protect the internal conductors and insulator layers from corrosive substances found in the wellbore, such as hydrogen sulphide. The bedding/barrier layer also provides mechanical protection of the internal components from the environment and the armour wires. In particular, when the cable comprises an external layer of armour wires (see below), such armour wires can deform under load, and return to their original geometry during unloading. This deformation of the armour wires subjects the internal components of the cable to considerable mechanical stress.

The bedding/barrier layer of the cable may comprise a third fluoropolymer. The third fluoropolymer may comprise, or consist of, a fifth monomer. The fifth monomer may be selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene, and hexafluoropropylene.

The third fluoropolymer may further comprise a sixth monomer. In another embodiment, the third fluoropolymer may consist of a fifth and a sixth monomer. The sixth monomer may be selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene and hexafluoropropylene. In a preferred embodiment, the third fluoropolymer consists of one monomer of 1,1,2,2-tetrafluoroethylene, i.e. PTFE, or most preferably, the third fluoropolymer consists of two alternating monomers of ethylene and 1,1,2,2-tetrafluoroethylene, i.e. ETFE.

As described previously, the first, second and third fluoropolymers may consist of, or comprise, one or two monomers. However the first, second and third fluoropolymers may alternatively further comprise three, four of more monomers. These further monomers may be selected from the list of monomers described above.

As noted above, in a preferred embodiment, the insulation layers, the filler and the bedding/barrier layer comprise of or consist of PTFE , ETFE and PTFE, respectively. However, it will be appreciated that other combinations of fluoropolymers are envisaged. For instance, all fluoropolymers may be the same, e.g. all consisting of, or comprising, ETFE or PTFE. Alternatively, all fluoropolymers may be different.

The insulator layers and the bedding/barrier layer may be formed by extrusion, thereby providing a contiguous and seam-free layer. Alternatively, they made by formed by wrapping or winding tape around the cable. If tapes of material are used, then it is important that tapes are wrapped/wound in a manner to create a continuous layer. Since extrusion is more likely to provide contiguous/seam-free layers, extrusion is referred.

The cable comprises a first plurality of wires, wherein the first plurality of wires extends along the longitudinal axis of the cable and is axially external to the three or more cores. If the cable further comprises a copper tape and/or a bedding/barrier layer, then the first plurality of wires may be disposed axially externally to these features. These armour wires fulfil a number of roles. They provide tensile strength to the cable, such that it can both support its own weight, and that of any devices suspended using the cable during operation in a wellbore. This means that the cable of present invention can support other commonly used downhole devices, such as pumps, sensors and motors, in addition to its own self-weight. This is particularly useful when the cable of the present invention is used for powering an ESP, since not only can it support its own weight, it can support other equipment typically used during the operation of an ESP, such as the pump, motor and inverter. This is in contrast with presently available ESP cables, which lack tensile capacity and thus do not bear any weight themselves. This means presently available ESP cables are typically strapped to other cables/wires which are run into the hole in

parallel with the ESP cables to specifically provide the load-bearing function. The armour wires also provide the cable with integrity, in particular, by preventing the cable from flattening (and thus squashing the internal components), as well as preventing twisting, stretching and over-flexion of the cable. The cable may further comprise a second plurality of wires, wherein the second plurality of wires also extends along the longitudinal axis of the cable and is axially external to the first plurality of wires. Preferably, the wires of the first plurality of wires are helically wound in a first direction, and the wires of the second plurality of wires are helically wound in a direction opposition to the first. Providing two sets of wires provides a greater level of protection and load-carrying capacity compared to having just one set of wires. Winding of the two sets of wires in this manner provides the armour wires with further resistance against torsional, flexural and stretching forces.

Armour wires can be made of a resilient metal such as steel or steel alloy. However, given the armour may be subjected to harsh and corrosive environments, other materials with improved resistance to corrosion may be used instead, such as galvanised steel, stainless steel, or high strength stainless steel. For instance, the armour wires may be made of GIPS (galvanised improved plow steel) wires. However, GIPS is prone to cracking in H₂S-rich environments, which may lead to wire failure. Stainless steel, for instance, may be more resistant to hydrogen sulphide than galvanised steel.

The armour wires consist of a nickel-based alloy, which may provide the wires with a high resistance to cracking from exposure to hydrogen sulphide. The nickel-based alloy comprises nickel and chromium and optionally up to 20 % (w/w) additives or impurities. The additives or impurities include, but are not limited to, iron, molybdenum, niobium, cobalt, manganese, copper, aluminium, titanium, silicon, carbon, sulphur, phosphorus or boron, or any combination thereof. The nickel-based alloy may comprise of, or consist of, from 40 to 74% (w/w) nickel, 14 to 25% (w/w) chromium, and optionally up to 20 % (w/w) additives or impurities.

The nickel based alloy may comprise, or consist of, 72% (w/w) nickel, 14-17% (w/w) chromium, 6-10 % (w/w) iron, 1 % (w/w) manganese, 0.5 % (w/w) copper, with remainder impurities or additives (this alloy is available commercially under the name Inconel 600^{tm}).

The nickel based alloy may comprise, or consists of, 44.2 %-56 % (w/w) nickel, 20-24 % (w/w) chromium, 3 % (w/w) iron, 8-10 % (w/w) molybdenum, 10-15 % (w/w) cobalt, 0.5 % (w/w) manganese, 0.5 % (w/w) copper, 0.8-1.5 % (w/w) aluminium, 0.6 % (w/w) titanium with remainder impurities or additives (this alloy is available commercially under the name Inconel 617^{tm}).

The nickel based alloy may comprise, or consists of 58 % (w/w) nickel, 20-23 % (w/w) chromium, 5 % (w/w) iron, 8-10 % (w/w) molybdenum, 3.15-4.15 % (w/w) niobium, 1 % (w/w) cobalt, 0.5 % (w/w) manganese, 0.4 % (w/w) aluminium, 0.4 % (w/w) titanium, with remainder impurities or additives (this alloy is available commercially under the name Inconel 625^{tm}). This is the most preferred nickel-based alloy for use with the invention.

The nickel based alloy may comprise, or consists of 50-55 % (w/w) nickel, 17-21 % (w/w) chromium, 2.8-3.3 % (w/w) molybdenum, 4.75-5.5 % (w/w) niobium, 1% cobalt, 0.35 % (w/w) manganese, 0.2-0.8 % (w/w) aluminium, 0.65-1.15 % (w/w) titanium, 0.3 % (w/w) copper with remainder impurities or additives (this alloy is available commercially under the name Inconel 718^{tm}).

The nickel based alloy may comprise, or consists of 70 % (w/w) nickel, 14-17 % (w/w) chromium, 5-9 % (w/w) iron, 0.7-1.2 % (w/w) niobium, 1 % (w/w) cobalt, 1 % (w/w) manganese, 0.5 % (w/w) copper, 0.4-1 % (w/w) aluminium, 2.25-2.75 % (w/w) titanium with remainder impurities or additives (this alloy is available commercially under the name Inconel X-750^{tm}).

The diameter of the cable, and the thickness of the various layers, may be varied. In an embodiment, each of the three conductors may have a cross-sectional area in the range of 25 to 45 mm², preferably 28 to 38 mm², more preferably 31 to 35 mm², most preferably 33.6 mm². Each insulator layer of each core may have a thickness in the range of 1 to 4 mm, preferably 1.4 to 3 mm, more preferably 1.8 to 2.5 mm, most preferably 2.16 mm. Each braiding layer may have a thickness in the range of from 0.1 to 1.5 mm, preferably 0.2 to 1.0mm, more preferably 0.3 to 0.6 mm, most preferably 0.4 mm. The copper tape may have a thickness in the range of from 0.05 to 1.2 mm, preferably 0.1 to 0.8 mm, more preferably 0.15 to 0.4 mm, most preferably 0.2 mm. The bedding/barrier layer may have a thickness in the range of from 0.2 to 2 mm, preferably 0.5 to 1.6 mm, more preferably 0.8 to 1.3 mm, most preferably 1.0 mm. The layer formed of the first
plurality of wires may have a thickness in the range of from 1 to 4 mm, preferably 1.5 to 3 mm, more preferably 2 to 2.8 mm, most preferably 2.4 mm. The layer formed of the second plurality of wires may have a thickness in the range of from 1 to 3 mm, preferably 1.3 to 2.5 mm, more preferably 1.6 to 2 mm, most preferably 1.8 mm.

Herein described is a use of a fluoropolymer as an insulator in a cable. The cable may be subjected to temperatures greater than 80 °C, 90 °C, 100 °C, 110 °C, 120 °C, 130 °C, 140 °C, or 150°C.

The fluoropolymer may comprise, or consist of, a first monomer. The first monomer may be selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene, and hexafluoropropylene. Alternatively, the fluoropolymer may further comprise a second monomer, or the fluoropolymer may consist of a first and second monomer. The second monomer may be selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene and hexafluoropropylene. Particularly preferred fluoropolymers for use as an insulator are PTFE or ETFE.

In another aspect, the present invention provides a method of manufacturing a cable comprising three or more cores, each core comprising a conductor and an insulator layer disposed axially external to the conductor, wherein each core extends along a longitudinal axis of the cable, wherein the insulator layer comprises a first fluoropolymer, and a first plurality of wires disposed axially external to the three or more cores and extending along the longitudinal axis of the cable, comprising disposing the insulator layer around the conductor and along a longitudinal axis thereof to form each of the three or more cores, and disposing the first plurality of wires around the three or more cores and along the longitudinal axis of the cable.

The conductors may comprise tinned copper or copper alloy. The conductors may comprise a plurality of stranded wires. The plurality of the stranded wires of the conductors may be braided.

Braiding layers may also be provided, which may be disposed around the insulator layers. The filler may also be provided, which may be disposed in the interstices. A copper tape may also be provided, which may be disposed around the core bundle. A bedding/barrier layer may also be provided, which may be disposed around the copper tape.

The method may further comprise the steps of providing a first plurality of wires, and disposing the first plurality of wires along the longitudinal axis of the cable and axially external to the bedding/barrier layer. The external surface of the bedding/barrier layer is preferably surrounded by the first plurality of wires. A second plurality of wires may be provided, which may then be disposed extending along the longitudinal axis of the cable and axially external to the first plurality of wires. The first plurality of wires may be helically wound in a first direction, and the wires of the second plurality of wires may be helically wound in a direction opposition to the first.

In another aspect the present invention provides a method of transmitting electricity, comprising providing a first installation or device and a second installation or device connected by a cable according to the present invention, and transmitting electricity from the first installation or device to the second installation or device through the cable, wherein the first installation or device is in a wellbore.

The first installation or device may be a sensor or an electrical submersible pump, or any other device typically used downhole for oil exploration or production that also requires electricity. The second installation or device may be a reel or spool, which may be installed at the surface.

The first device may be lowered into the wellbore by lowering a tension applied to the cable, i.e. by relaxing tension on the cable, the device or installation may lower into the wellbore under the influence of gravity. After the first device or installation has fulfilled its role or function downhole, it may be raised from the wellbore by increasing a tension to the cable. In other words, by pulling on the cable from the surface, the device or installation and the cable may be pulled out of the hole. The reel or spool installed on the surface may be used to lift or lower the device/ installation from the surface, as well as storing any excess cable. Alternatively, a separate device, such as a hoist or winch may be used to lift/lower the first installation or device, and in this case, the reel or spool may be used to only store the excess cable.

### Brief Description of the Drawing

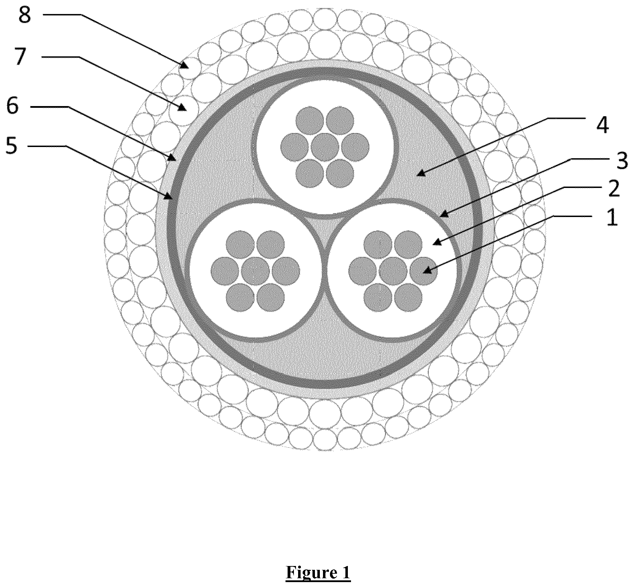

The accompanying Figure 1 helps illustrate the example and the present invention, but is not to be construed as limiting the invention. Figure 1 shows a cross section of an embodiment of the cable of the present invention, and is not to scale. The conductors 1 and insulator layers 2 form the core of the cable. The cable may be formed of a plurality of wires (7 are schematically shown, although more may be used). The conductors 1 are surrounded by insulator layers 2. Each insulation layer is surrounded by a braiding layer 3. The braiding layer is surrounded by fillers in layer 4. The fillers are surrounded by a copper tape 5. The copper tape is surrounded by a bedding/barrier layer 6. Armour wires are situated around the outside of the cable - a first plurality 7 is disposed in a layer, which is surrounded by a second plurality of wires 8.

The invention may be better understood with reference to the following example.

### Example

A cable was formed with the following characteristics:
- Conductor: compact 37 wire, copper (33.6 mm²)
- Insulator layer: PTFE (2.16 mm)
- Braiding layer: aramid fibre (0.4 mm)
- Filler: ETFE
- Copper tape: copper alloy (0.2 mm)
- Bedding/barrier layer: PTFE (1.0 mm)
- Layer of first plurality of armour wire: nickel-based alloy (2.4 mm)
- Layer of second plurality of armour wire: nickel-based alloy (1.8 mm)

This provides a cable having the following properties:
- Outer diameter of 35.2 mm
- Voltage rating 5kV AC
- Current rating 9 A
- Weight 3.81 kg/m
- Working load 149.2 kN
- Minimum breaking tension 351 kN
- Minimum bending radii (zero tension) 0.26 m; (92.1kN operating tension) 0.39 m

## Claims

1. A cable comprising:
three or more cores, each core comprising a conductor and an insulator layer disposed axially external to the conductor, wherein each core extends along a longitudinal axis of the cable, and wherein the insulator layer comprises a first fluoropolymer, and
a first plurality of wires disposed axially external to the three or more cores and extending along the longitudinal axis of the cable
wherein the first plurality of wires consists of an alloy comprising nickel, chromium and optionally up to 20% (w/w) additives or impurities.

2. A cable according to claim 1, wherein the three or more cores extend helically along the longitudinal axis of the cable, wherein the helices of each core preferably intertwine.

3. A cable according to claim 1 or 2, wherein the fluoropolymer consists of a first monomer, or is a copolymer comprising a first monomer and a second monomer, wherein
the first monomer is selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1-dichloro-2,2-difluoroethylene, 1,2-dichloro-1,2-difluoroethylene, 1,1,2-trichloro-2-fluoroethylene, and hexafluoropropylene, and
the second monomer is selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1-dichloro 2,2-difluoroethylene, 1,2-dichloro-1,2-difluoroethylene, 1,1,2-trichloro-2-fluoroethylene and hexafluoropropylene,
preferably wherein the first fluoropolymer is polytetrafluoroethylene or poly(ethylene-co-tetrafluoroethylene).

4. A cable according to any preceding claim wherein each core further comprises a braiding layer external to the insulator layer and extending along the longitudinal axis of the cable, wherein the braiding layer preferably comprises aramid fibre.

5. A cable according to any preceding claim, wherein interstices formed between the three or more cores comprise a filler material comprising a second fluoropolymer,
preferably wherein the second fluoropolymer consists of a third monomer, or is a copolymer comprising a third monomer and a fourth monomer, wherein:
the third monomer is selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1-dichloro-2,2-difluoroethylene, 1,2-dichloro-1,2-difluoroethylene, 1,1,2-trichloro-2-fluoroethylene, and hexafluoropropylene, and
the fourth monomer is selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1-dichloro 2,2-difluoroethylene, 1,2-dichloro-1,2-difluoroethylene, 1,1,2-trichloro-2-fluoroethylene and hexafluoropropylene,
more preferably the second fluoropolymer is polytetrafluoroethylene or poly(ethylene-co-tetrafluoroethylene).

6. A cable according to any preceding claim, further comprising a copper tape disposed axially external to the three or more cores and extending along the longitudinal axis of the cable.

7. A cable according to claim 6, further comprising a bedding/barrier layer comprising a third fluoropolymer, wherein the bedding/barrier layer extends along the longitudinal axis of the cable and is axially external to the copper tape,
preferably wherein the third fluoropolymer consists of a fifth monomer, or is a copolymer comprising a fifth monomer and a sixth monomer, wherein:
the fifth monomer is selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1-dichloro- 2,2-difluoroethylene, 1,2-dichloro-1,2-difluoroethylene, 1,1,2-trichloro-2-fluoroethylene, and hexafluoropropylene, and
the sixth monomer is selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1-dichloro-2,2-difluoroethylene, 1,2-dichloro-1,2-difluoroethylene, 1,1,2-trichloro-2-fluoroethylene and hexafluoropropylene,
more preferably wherein the third fluoropolymer is polytetrafluoroethylene or poly(ethylene-co-tetrafluoroethylene).

8. A cable according to any preceding claim, further comprising a second plurality of wires, wherein the second plurality of wires extends along the longitudinal axis of the cable and is axially external to the first plurality of wires.

9. A cable according to claim 8 wherein the wires of the first plurality of wires are helically wound in a first direction, and the wires of the second plurality of wires are helically wound in a direction opposite to the first direction.

10. A cable according to any preceding claim, wherein the second plurality of wires comprises an alloy comprising nickel.

11. A cable according to any preceding claim, wherein the first plurality of wires and/or the second plurality of wires consists of an alloy consisting of:
- nickel, chromium and optionally up to 20% (w/w) additives or impurities;
- 40 to 74% (w/w) nickel, 14 to 25% (w/w) chromium, and optionally up to 20 % (w/w) additives or impurities;
- 58 % (w/w) nickel, 20-23 % (w/w) chromium, 5 % (w/w) iron, 8-10 % (w/w) molybdenum, 3.15-4.15 % (w/w) niobium, 1 % (w/w) cobalt, 0.5 % (w/w) manganese, 0.4 % (w/w) aluminium, 0.4 % (w/w) titanium, with remainder impurities or additives;
- 72% (w/w) nickel, 14-17% (w/w) chromium, 6-10 % (w/w) iron, 1 % (w/w) manganese, 0.5 % (w/w) copper, with remainder impurities or additives;
- 44.2 %-56 % (w/w) nickel, 20-24 % (w/w) chromium, 3 % (w/w) iron, 8-10 % (w/w) molybdenum, 10-15 % (w/w) cobalt, 0.5 % (w/w) manganese, 0.5 % (w/w) copper, 0.8-1.5 % (w/w) aluminium, 0.6 % (w/w) titanium with remainder impurities or additives;
- 50-55 % (w/w) nickel, 17-21 % (w/w) chromium, 2.8-3.3 % (w/w) molybdenum, 4.75-5.5 % (w/w) niobium, 1% (w/w) cobalt, 0.35 % (w/w) manganese, 0.2-0.8 % (w/w) aluminium, 0.65-1.15 % (w/w) titanium, 0.3 % (w/w) copper with remainder impurities or additives; or
- 70 % (w/w) nickel, 14-17 % (w/w) chromium, 5-9 % (w/w) iron, 0.7-1.2 % (w/w) niobium, 1 % (w/w) cobalt, 1 % (w/w) manganese, 0.5 % (w/w) copper, 0.4-1 % (w/w) aluminium, 2.25-2.75 % (w/w) titanium with remainder impurities or additives,
optionally wherein the additives or impurities are selected from iron, molybdenum, niobium, cobalt, manganese, copper, aluminium, titanium, silicon, carbon, sulphur, phosphorus or boron, or any combination thereof.

12. A method of manufacturing a cable according to any one of claims 1 to 11, comprising:
disposing the insulator layer around the conductor and along a longitudinal axis thereof to form each of the three or more cores, and disposing the first plurality of wires around the three or more cores and along the longitudinal axis of the cable.

13. A method of transmitting electricity, comprising providing a first installation or device and a second installation or device connected by a cable according to any one of claims 1 to 11, and transmitting electricity from the first installation or device to the second installation or device through the cable, wherein the first installation or device is in a wellbore, and
optionally further comprising lowering the first device or installation into the wellbore by lowering a tension applied to the cable, and/or raising the first device or installation from the wellbore by increasing a tension to the cable.

14. A method of suspending a first device or installation in a wellbore, comprising providing a cable according to any one of claims 1 to 11, securing a first end of the cable to the first device or installation, securing a second end of the cable to a second device or installation, and suspending the first device or installation in the wellbore,
optionally further comprising transmitting electricity from the first installation or device to the second installation or device through the cable.

## Patentansprüche

1. Kabel, das Folgendes umfasst:
drei oder mehr Adern, wobei jede Ader einen Leiter und eine axial außerhalb des Leiters angeordnete Isolatorschicht umfasst, wobei sich jede Ader entlang einer Längsachse des Kabels erstreckt, und wobei die Isolatorschicht ein erstes Fluorpolymer umfasst, und
eine erste Vielzahl von Drähten, die axial außerhalb der drei oder mehr Adern angeordnet ist und sich entlang der Längsachse des Kabels erstreckt,
wobei die erste Vielzahl von Drähten aus einer Nickel, Chrom und optional bis zu 20 Gew.-% Additive oder Verunreinigungen umfassenden Legierung besteht.

2. Kabel nach Anspruch 1, wobei sich die drei oder mehr Adern spiralförmig entlang der Längsachse des Kabels erstrecken, wobei die Spiralen jeder Ader vorzugsweise verschlungen sind.

3. Kabel nach Anspruch 1 oder 2, wobei das Fluorpolymer aus einem ersten Monomer besteht oder es sich dabei um ein ein erstes Monomer und ein zweites Monomer umfassendes Copolymer handelt, wobei
das erste Monomer aus einer Gruppe ausgewählt wird, die aus 1,1,2,2-Tetrafluorethylen, 1-Fluorethylen, 1,1-Difluorethylen, 1,2-Difluorethylen, 1,1,2-Trifluorethylen, Hexafluorpropen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht, und
das zweite Monomer aus einer Gruppe ausgewählt wird, die aus Ethylen, Propylen, 1,1,2,2-Tetrafluorethylen, 1-Fluorethylen, 1,1-Difluorethylen, 1,2-Difluorethylen, 1,1,2-Trifluorethylen, Hexafluorpropylen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht,
wobei es sich bei dem ersten Fluorpolymer vorzugsweise um Polytetrafluorethylen oder Poly(ethylen-co-tetrafluorethylen) handelt.

4. Kabel nach einem der vorangehenden Ansprüche, wobei jede Ader weiter eine Flechtschicht außerhalb der Isolatorschicht umfasst, die sich entlang der Längsachse des Kabels erstreckt, wobei die Flechtschicht vorzugsweise Aramidfasern umfasst.

5. Kabel nach einem der vorangehenden Ansprüche, wobei zwischen den drei oder mehr Adern gebildeten Zwischenräume einen ein zweites Fluorpolymer umfassenden Füllstoff umfassen,
wobei das zweite Fluorpolymer vorzugsweise aus einem dritten Monomer besteht oder es sich dabei um ein ein drittes Monomer und ein viertes Monomer umfassendes Copolymer handelt, wobei:
das dritte Monomer aus einer Gruppe ausgewählt wird, die aus 1,1,2,2-Tetrafluorethylen, 1-Fluorethylen, 1,1-Difluorethylen, 1,2-Difluorethylen, 1,1,2-Trifluorethylen, Hexafluorpropen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht, und
das vierte Monomer aus einer Gruppe ausgewählt wird, die aus Ethylen, Propylen, 1,1,2,2-Tetrafluorethylen, 1-Fluorethylen, 1,1-Difluorethylen, 1,2-Difluorethylen, 1,1,2-Trifluorethylen, Hexafluorpropylen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht,
wobei es sich bei dem zweiten Fluorpolymer besser um Polytetrafluorethylen oder Poly(ethylen-co-tetrafluorethylen) handelt.

6. Kabel nach einem der vorangehenden Ansprüche, weiter umfassend ein Kupferband, das axial außerhalb der drei oder mehr Adern angeordnet ist und sich entlang der Längsachse des Kabels erstreckt.

7. Kabel nach Anspruch 6, weiter umfassend eine Bettungs-/Sperrschicht, die ein drittes Fluorpolymer umfasst, wobei sich die Bettungs-/Sperrschicht entlang der Längsachse des Kabels erstreckt und axial außerhalb des Kupferbands liegt,
wobei das dritte Fluorpolymer vorzugsweise aus einem fünften Monomer besteht oder es sich dabei um ein ein fünftes Monomer und ein sechstes Monomer umfassendes Copolymer handelt, wobei:
das fünfte Monomer aus einer Gruppe ausgewählt wird, die aus 1,1,2,2-Tetrafluorethylen, 1-Fluorethylen, 1,1-Difluorethylen, 1,2-Difluorethylen, 1,1,2-Trifluorethylen, Hexafluorpropen, Perfluorpropylvinylether,
Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht, und
das sechste Monomer aus einer Gruppe ausgewählt wird, die aus Ethylen, Propylen, 1,1,2,2-Tetrafluorethylen, 1-Fluorethylen, 1,1-Difluorethylen, 1,2-Difluorethylen, 1,1,2-Trifluorethylen, Hexafluorpropylen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht,
wobei es sich bei dem dritten Fluorpolymer besser um Polytetrafluorethylen oder Poly(ethylen-co-tetrafluorethylen) handelt.

8. Kabel nach einem der vorangehenden Ansprüche, weiter umfassend eine zweite Vielzahl von Drähten, wobei sich die zweite Vielzahl von Drähten entlang der Längsachse des Kabels erstreckt und axial außerhalb der ersten Vielzahl von Drähten liegt.

9. Kabel nach Anspruch 8, wobei die Drähte der ersten Vielzahl von Drähten in einer ersten Richtung spiralförmig gewickelt sind und die Drähte der zweiten Vielzahl von Drähten in einer der ersten Richtung entgegengesetzten Richtung spiralförmig gewickelt sind.

10. Kabel nach einem der vorangehenden Ansprüche, wobei die zweite Vielzahl von Drähten eine Nickel umfassende Legierung umfasst.

11. Kabel nach einem der vorangehenden Ansprüche, wobei die erste Vielzahl von Drähten und/oder die zweite Vielzahl von Drähten aus einer Legierung besteht, die aus Folgendem besteht:
- Nickel, Chrom und optional bis zu 20 Gew.-% Additive oder Verunreinigungen;
- 40 bis 74 Gew.-% Nickel, 14 bis 25 Gew.-% Chrom und optional bis zu 20 Gew.-% Additive oder Verunreinigungen;
- 58 Gew.-% Nickel, 20-23 Gew.-% Chrom, 5 Gew.-% Eisen, 8-10 Gew.-% Molybdän, 3,15-4,15 Gew.-% Niob, 1 Gew.-% Kobalt, 0,5 Gew.-% Mangan, 0,4 Gew.-% Aluminium, 0,4 Gew.-% Titan mit restlichen Verunreinigungen oder Additiven;
- 72 Gew.-% Nickel, 14-17 Gew.-% Chrom, 6-10 Gew.-% Eisen, 1 Gew.-% Mangan, 0,5 Gew.-% Kupfer mit restlichen Verunreinigungen oder Additiven;
- 44,2-56 Gew.-% Nickel, 20-24 Gew.-% Chrom, 3 Gew.-% Eisen, 8-10 Gew.-% Molybdän, 10-15 Gew.-% Kobalt, 0,5 Gew.-% Mangan, 0,5 Gew.-% Kupfer, 0,8-1,5 Gew.-% Aluminium, 0,6 Gew.-% Titan mit restlichen Verunreinigungen oder Additiven;
- 50-55 Gew.-% Nickel, 17-21 Gew.-% Chrom, 2,8-3,3 Gew.-% Molybdän, 4,75-5,5 Gew.-% Niob, 1 Gew.-% Kobalt, 0,35 Gew.-% Mangan, 0,2-0,8 Gew.-% Aluminium, 0,65-1,15 Gew.-% Titan, 0,3 Gew.-% Kupfer mit restlichen Verunreinigungen oder Additiven; oder
70 Gew.-% Nickel, 14-17 Gew.-% Chrom, 5-9 Gew.-% Eisen, 0,7-1,2 Gew.-% Niob, 1 Gew.-% Kobalt, 1 Gew.-% Mangan, 0,5 Gew.-% Kupfer, 0,4-1 Gew.-% Aluminium, 2,25-2,75 Gew.-% Titan mit restlichen Verunreinigungen oder Additiven,
wobei optional die Additive oder Verunreinigungen ausgewählt werden aus Eisen, Molybdän, Niob, Kobalt, Mangan, Kupfer, Aluminium, Titan, Silizium, Kohlenstoff, Schwefel, Phosphor oder Bor oder beliebigen Kombinationen davon.

12. Verfahren zum Herstellen eines Kabels nach einem der Ansprüche 1 bis 11, das Folgendes umfasst:
Anordnen der Isolatorschicht um den Leiter und entlang einer Längsachse desselben, um jede der drei oder mehr Adern zu bilden, und Anordnen der ersten Vielzahl von Drähten um die drei oder mehr Adern und entlang der Längsachse des Kabels.

13. Verfahren zum Übertragen von elektrischem Strom, umfassend das Bereitstellen einer ersten Installation oder Vorrichtung und einer zweiten Installation oder Vorrichtung, die durch ein Kabel nach einem der Ansprüche 1 bis 11 verbunden sind, und Übertragen von elektrischem Strom von der ersten Installation oder Vorrichtung zu der zweiten Installation oder Vorrichtung durch das Kabel, wobei sich die erste Installation oder Vorrichtung in einem Brunnenbohrloch befindet, und
optional weiter umfassend das Absenken der ersten Vorrichtung oder Installation in das Brunnenbohrloch durch Senken eines auf das Kabel aufgebrachten Zugs und/oder Anheben der ersten Vorrichtung oder Installation aus dem Brunnenbohrloch durch Erhöhen eines Zugs auf das Kabel.

14. Verfahren zum Aufhängen einer ersten Vorrichtung oder Installation in einem Brunnenbohrloch, umfassend das Bereitstellen eines Kabels nach einem der Ansprüche 1 bis 11, Befestigen eines ersten Endes des Kabels an der ersten Vorrichtung oder Installation, Befestigen eines zweiten Endes das Kabels an einer zweiten Vorrichtung oder Installation und Aufhängen der ersten Vorrichtung oder Installation in dem Brunnenbohrloch,
optional weiter umfassend das Übertragen von elektrischem Strom von der ersten Installation oder Vorrichtung zu der zweiten Installation oder Vorrichtung durch das Kabel.

## Revendications

1. Câble comprenant :
trois âmes ou plus, chaque âme comprenant un conducteur et une couche d'isolant disposée à l'extérieur du conducteur dans le sens axial, chaque âme s'étendant le long d'un axe longitudinal du câble et la couche d'isolant comprenant un premier fluoropolymère, et
une première pluralité de fils disposée à l'extérieur des trois âmes ou plus dans le sens axial et s'étendant le long de l'axe longitudinal du câble,
dans lequel la première pluralité de fils est constituée d'un alliage comprenant du nickel, du chrome et, facultativement, jusqu'à 20 % en poids d'additifs ou d'impuretés.

2. Câble selon la revendication 1, dans lequel les trois âmes ou plus s'étendent en spirale le long de l'axe longitudinal du câble, les spirales de chaque âme étant de préférence entrelacées.

3. Câble selon la revendication 1 ou la revendication 2, dans lequel le fluoropolymère est constitué d'un premier monomère ou est un copolymère comprenant un premier monomère et un deuxième monomère, dans lequel
le premier monomère est choisi dans un groupe constitué par le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène, et
le deuxième monomère est choisi dans un groupe constitué par l'éthylène, le propylène, le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropylène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène,
de préférence dans lequel le premier fluoropolymère est le polytétrafluoroéthylène ou le poly(éthylène-co-tétrafluoroéthylène).

4. Câble selon l'une quelconque des revendications précédentes, dans lequel chaque âme comprend en outre une couche de tresse disposée à l'extérieur de la couche d'isolant et s'étendant le long de l'axe longitudinal du câble, la couche de tresse comprenant de préférence de la fibre d'aramide.

5. Câble selon l'une quelconque des revendications précédentes, dans lequel des interstices formés entre les trois âmes ou plus comprennent un matériau de remplissage comprenant un deuxième fluoropolymère,
de préférence dans lequel le deuxième fluoropolymère est constitué d'un troisième monomère ou est un copolymère comprenant un troisième monomère et un quatrième monomère, dans lequel :
le troisième monomère est choisi dans un groupe constitué par le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène, et
le quatrième monomère est choisi dans un groupe constitué par l'éthylène, le propylène, le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropylène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène,
plus préférentiellement le deuxième fluoropolymère est le polytétrafluoroéthylène ou le poly(éthylène-co-tétrafluoroéthylène).

6. Câble selon l'une quelconque des revendications précédentes, comprenant en outre un ruban de cuivre disposé à l'extérieur des trois âmes ou plus dans le sens axial et s'étendant le long de l'axe longitudinal du câble.

7. Câble selon la revendication 6, comprenant en outre une couche d'assise/barrière comprenant un troisième fluoropolymère, dans lequel la couche d'assise/barrière s'étend le long de l'axe longitudinal du câble et est disposée à l'extérieur du ruban de cuivre dans le sens axial,
de préférence dans lequel le troisième fluoropolymère est constitué d'un cinquième monomère ou est un copolymère comprenant un cinquième monomère et un sixième monomère, dans lequel :
le cinquième monomère est choisi dans un groupe constitué par le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène, et
le sixième monomère est choisi dans un groupe constitué par l'éthylène, le propylène, le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropylène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène,
plus préférentiellement dans lequel le troisième fluoropolymère est le polytétrafluoroéthylène ou le poly(éthylène-co-tétrafluoroéthylène).

8. Câble selon l'une quelconque des revendications précédentes, comprenant en outre une deuxième pluralité de fils, la deuxième pluralité de fils s'étendant le long de l'axe longitudinal du câble et étant disposée à l'extérieur de la première pluralité de fils dans le sens axial.

9. Câble selon la revendication 8, dans lequel les fils de la première pluralité de fils sont enroulés en spirale dans une première direction et les fils de la deuxième pluralité de fils sont enroulés en spirale dans une direction opposée à la première direction.

10. Câble selon l'une quelconque des revendications précédentes, dans lequel la deuxième pluralité de fils comprend un alliage comprenant du nickel.

11. Câble selon l'une quelconque des revendications précédentes, dans lequel la première pluralité de fils et/ou la deuxième pluralité de fils est constituée d'un alliage constitué de :
- nickel, chrome et, facultativement, jusqu'à 20 % en poids d'additifs ou d'impuretés ;
- 40 à 74 % en poids de nickel, 14 à 25 % en poids de chrome et, facultativement, jusqu'à 20 % en poids d'additifs ou d'impuretés ;
- 58 % en poids de nickel, 20 à 23 % en poids de chrome, 5 % en poids de fer, 8 à 10 % en poids de molybdène, 3,15-4,15 % en poids de niobium, 1 % en poids de cobalt, 0,5 % en poids de manganèse, 0,4 % en poids d'aluminium, 0,4 % en poids de titane, le reste étant des impuretés ou des additifs ;
- 72 % en poids de nickel, 14 à 17 % en poids de chrome, 6 à 10 % en poids de fer, 1 % en poids de manganèse, 0,5 % en poids de cuivre, le reste étant des impuretés ou des additifs ;
- 44,2 à 56 % en poids de nickel, 20 à 24 % en poids de chrome, 3 % en poids de fer, 8 à 10 % en poids de molybdène, 10 à 15 % en poids de cobalt, 0,5 % en poids de manganèse, 0,5 % en poids de cuivre, 0,8 à 1,5 % en poids d'aluminium, 0,6 % en poids de titane, le reste étant des impuretés ou des additifs ;
- 50 à 55 % en poids de nickel, 17 à 21 % en poids de chrome, 2,8 à 3,3 % en poids de molybdène, 4,75 à 5,5 % en poids de niobium, 1 % en poids de cobalt, 0,35 % en poids de manganèse, 0,2 à 0,8 % en poids d'aluminium, 0,65 à 1,15 % en poids de titane, 0,3 % en poids de cuivre, le reste étant des impuretés ou des additifs ; ou
- 70 % en poids de nickel, 14 à 17 % en poids de chrome, 5 à 9 % en poids de fer, 0,7 à 1,2 % en poids de niobium, 1 % en poids de cobalt, 1 % en poids de manganèse, 0,5 % en poids de cuivre, 0,4 à 1 % en poids d'aluminium, 2,25 à 2,75 % en poids de titane, le reste étant des impuretés ou des additifs,
facultativement, dans lequel les additifs ou impuretés sont choisis parmi le fer, le molybdène, le niobium, le cobalt, le manganèse, le cuivre, l'aluminium, le titane, le silicium, le carbone, le soufre, le phosphore ou le bore, ou une combinaison quelconque de ces éléments.

12. Procédé de fabrication d'un câble selon l'une quelconque des revendications 1 à 11, comprenant :
la disposition de la couche d'isolant autour du conducteur et le long d'un axe longitudinal de celui-ci afin de former chacune des trois âmes ou plus, et la disposition de la première pluralité de fils autour des trois âmes ou plus et le long de l'axe longitudinal du câble.

13. Procédé de transmission d'électricité, comprenant la mise en place d'une première installation ou d'un premier dispositif et d'une deuxième installation ou d'un deuxième dispositif reliés par un câble selon l'une quelconque des revendications 1 à 11, et la transmission d'électricité depuis la première installation ou le premier dispositif à la deuxième installation ou au deuxième dispositif par le biais du câble, la premier installation ou le premier dispositif se trouvant dans un puits de forage, et
facultativement, comprenant en outre la descente du premier dispositif ou de la première installation dans le puits de forage en réduisant une traction appliquée au câble et/ou la remontée du premier dispositif ou de la première installation hors du puits de forage en augmentant une traction appliquée au câble.

14. Procédé de suspension d'un premier dispositif ou d'une première installation dans un puits de forage, comprenant la mise en place d'un câble selon l'une quelconque des revendications 1 à 11, la fixation d'une première extrémité du câble au premier dispositif ou à la première installation, la fixation d'une deuxième extrémité du câble à un deuxième dispositif ou à une deuxième installation, et la suspension du premier dispositif ou de la première installation dans le puits de forage,
facultativement, comprenant en outre la transmission d'électricité depuis la première installation ou le premier dispositif à la deuxième installation ou au deuxième dispositif par le biais du câble.
